# EUROPÄISCHE PATENTANMELDUNG

(11) **EP 1 700 771 A2**
(43) Veröffentlichungstag der Anmeldung: **13.09.2006**
(21) Anmeldenummer: 06004108.4
(22) Anmeldetag: 01.03.2006
(51) Int. Cl.: B62D 1/10

(54) **Fahrzeuglenkvorrichtung mit feststehendem Mittelteil**

(30) Priorität: 10.03.2005 DE 202005003848 U
(71) Anmelder: TRW Automotive Safety Systems GmbH, 63743 Aschaffenburg (DE)
(72) Erfinder: Fäth, Stefan, 63743 Aschaffenburg (DE)
(74) Vertreter: Strass, Jürgen

(57) **Zusammenfassung**

Eine Fahrzeuglenkvorrichtung (10) umfaßt einen drehfest an eine Lenksäule (18) gekoppelten Lenkradteil und einen gegenüber einer Drehung des Lenkradteils feststehenden Mittelteil. Es ist eine Getriebeeinheit (24) vorgesehen, die eine Drehung des Lenkradteils in einer ersten Richtung in eine entsprechende Drehung des Mittelteils in eine der ersten Richtung entgegengesetzten zweiten Richtung umsetzt. Die Fahrzeuglenkvorrichtung (10) umfaßt ferner eine schraubenartig gewundene Feder (30). Die Feder (30) trägt Leitungen zur elektrischen Anbindung von Funktionseinheiten, welche am Mittelteil angeordnet sind.

## Beschreibung

Die Erfindung betrifft eine Fahrzeuglenkvorrichtung, mit einem drehfest an eine Lenksäule gekoppelten Lenkradteil und einem gegenüber einer Drehung des Lenkradteils feststehenden Mittelteil, wobei eine Getriebeeinheit vorgesehen ist, die eine Drehung des Lenkradteils in einer ersten Richtung in eine entsprechende Drehung des Mittelteils in eine der ersten Richtung entgegengesetzten zweiten Richtung umsetzt.

Lenkvorrichtungen mit einem feststehenden Mittelteil haben grundsätzlich den Vorteil, daß am Mittelteil angeordnete Bedienelemente unabhängig von der Lenkradstellung immer an der gleichen Stelle zu finden sind. Bei Lenkvorrichtungen mit einem im feststehenden Mittelteil untergebrachten Gassackmodul muß der Gassack nicht mehr notwendigerweise symmetrisch zum Drehzentrum der Lenkvorrichtung gestaltet sein. Da die Orientierung des sich aus dem feststehenden Mittelteil entfaltenden Gassacks von vornherein feststeht, können asymmetrische Gassackformen mit optimierten Rückhalteeigenschaften eingesetzt werden. Sowohl die mechanische Realisierung der relativ zueinander drehbaren Baugruppen als auch die Verkabelung der am feststehenden Mittelteil angeordneten Komponenten erweisen sich jedoch als schwierig.

Aus der DE 36 21 226 C1 ist eine Lösung bekannt, die eine relative Drehung zwischen dem Lenkradteil und dem Mittelteil ermöglicht, wobei die mechanischen Belastungen über ein spezielles, feststehendes Getriebe übertragen werden. Der Anschluß eines in den Mittelteil integrierten Gassackmoduls erfolgt über einen ortsfesten Kabelschacht.

Eine ähnliche Lösung, jedoch mit einem an den drehbaren Lenkradteil gekoppelten Getriebe, geht aus der gattungsbildenden DE 20 2004 007 617 U1 hervor. Darin wird vorgeschlagen, den Gasgenerator mechanisch vom Gassackmodul zu entkoppeln, so daß dieser mit dem drehbaren Lenkradteil mitgedreht wird, um so eine Verkabelung mit einer normalen Wickelfeder wie bei herkömmlichen Lenkrädern ohne feststehenden Mittelteil zu ermöglichen. Alternativ ist eine Verkabelung fiir einen stationären Gasgenerator mit Hilfe einer Hauptwickelfeder und einer zusätzlichen Nebenwickelfeder vorgesehen.

Die EP 1 323 617 B1 schlägt eine Lenkvorrichtung mit einem Mittelteil vor, der gegenüber dem drehbaren Lenkradteil und auch gegenüber dem ortsfesten Lenkstock mit Hilfe eines Elektromotors gezielt verdreht werden kann. Die Kraftübertragung erfolgt hier über eine schraubenartig gewundene Feder, wobei die Speichen des drehbaren Lenkradteils zwischen zwei Windungen der Feder eingreifen. Es hat sich jedoch gezeigt, daß die Anforderungen an die Torsionssteifigkeit der Feder nicht ohne weiteres erfüllbar sind.

Aufgabe der Erfindung ist es, eine Lenkvorrichtung mit feststehendem Mittelteil zu schaffen, das eine zuverlässige Relativdrehung zwischen dem Lenkradteil und dem Mittelteil sowie eine kostengünstige Verkabelung der am feststehenden Mittelteil angeordneten elektrischen Funktionseinheiten bietet.

Gemäß der Erfindung ist bei einer Fahrzeuglenkvorrichtung der eingangs genannten Art vorgesehen, daß sie ferner eine schraubenartig gewundene Feder umfaßt, die Leitungen zur elektrischen Anbindung von Funktionseinheiten trägt, welche am Mittelteil angeordnet sind. Grundlage der Erfindung ist die klare Trennung zwischen der Drehübertragung und der elektrischen Anbindung. Für die Übertragung der Drehung des Lenkradteils auf den Mittelteil in umgekehrter Richtung ist alleine die Getriebeeinheit zuständig, die eine robuste Übertragung der mechanischen Kräfte erlaubt und nur wenig Bauraum in Anspruch nimmt. Unabhängig davon erfolgt die elektrische Anbindung der Funktionseinheiten des Mittelteils, insbesondere eines Gassackmoduls, mit Hilfe der schraubenartig gewundenen Feder. Somit ist überhaupt keine Wickelfeder mehr erforderlich. Da die Feder keine mechanischen Kräfte übertragen muß, bestehen keine besonderen Anforderungen an deren Torsionssteifigkeit.

Gemäß einer bevorzugten Ausführungsform der Erfindung weist die Nabe der Fahrzeuglenkvorrichtung als Bestandteil des Lenkradteils eine Durchtrittsöffnung auf, durch die die Feder durchgeführt ist.

Die Erfindung wird nachfolgend unter Bezugnahme auf die beigefügten Zeichnungen näher beschrieben. In den Zeichnungen zeigen:
- Figur 1 eine erfindungsgemäße Fahrzeuglenkvorrichtung in perspektivischer Ansicht;
- Figur 2 den für die Relativdrehung verantwortlichen Teil der erfindungsgemäßen Lenkvorrichtung in perspektivischer Ansicht;
- Figur 3eine Schraubenfeder für die elektrische Anbindung in perspektivischer Ansicht;
- Figur 4 eine Nabe der erfindungsgemäßen Lenkvorrichtung in perspektivischer Ansicht; und
- Figur 5 eine schematische Schnittansicht durch einen Teil der erfindungsgemäßen Lenkvorrichtung.

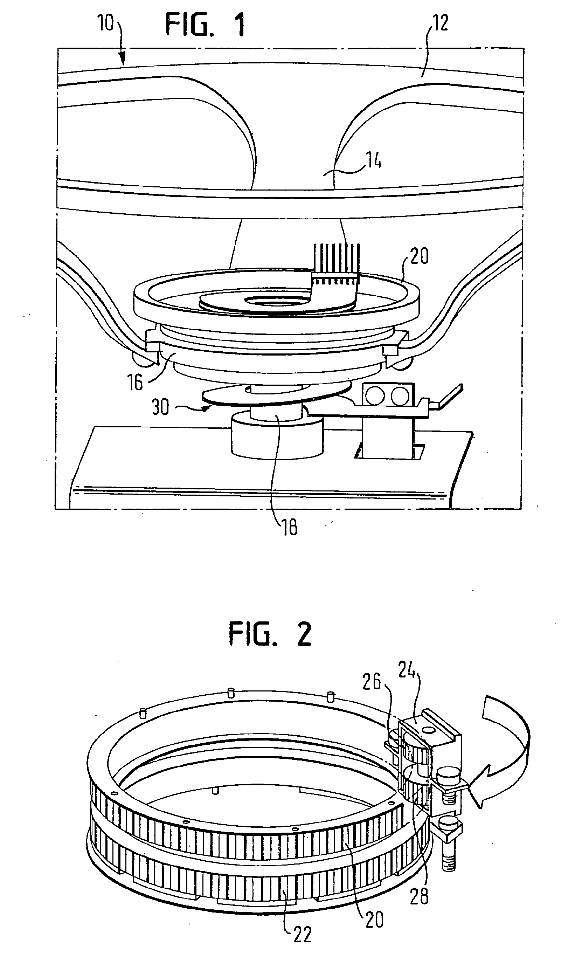

In Figur 1 ist eine Fahrzeuglenkvorrichtung 10 mit einem Lenkradkranz 12, Speichen 14 und einer Nabe 16 dargestellt, die drehfest mit einer Lenksäule 18 verbunden ist. Die Gesamtheit der drehfest an die Lenksäule 18 gekoppelten Bauteile wird im folgenden als Lenkradteil bezeichnet.

Die Lenkvorrichtung 10 weist ferner einen gegenüber dem drehbaren Lenkradteil feststehenden Mittelteil auf, von dem in Figur 1 nur ein oberer Zahnkranz 20 gezeigt ist. Am Mittelteil sind Funktionseinheiten angeordnet, insbesondere ein Gassackmodul, Hupenschalter, Funktionstasten, etc.

Damit der Mittelteil unabhängig von einer Drehung des Lenkradteils seine ortsfeste Position beibehält, ist eine Relativdrehung zwischen diesen beiden Baugruppen erforderlich. Die Relativdrehung wird durch eine spezielle Getriebeeinheit 24 mit einem Doppelritzelteil ermöglicht (siehe Figur 2). Eine solche Getriebeeinheit an sich ist aus der DE 20 2004 007 617 U1 bekannt, weshalb an dieser Stelle nicht im Detail auf deren Aufbau eingegangen wird.

Das Doppelritzelteil ist in einem mit der Nabe 16 verbundenen Skelettabschnitt der Lenkvorrichtung 10 gelagert, genauer gesagt in einem Bodenabschnitt des Skeletts. Das obere Ritzel 26 und das untere Ritzel 28 des Doppelritzelteils stehen mit zwei gleichartigen umlaufenden Zahnkränzen 20 bzw. 22 in Eingriff. Der untere Zahnkranz 22 ist fahrzeugfest gelagert. Der bereits erwähnte obere Zahnkranz 20 ist Bestandteil des feststehenden Mittelteils.

Bei einer Drehbewegung des Lenkradteils wird das Doppelritzelteil mitgenommen. Da der untere Zahnkranz 22 fahrzeugfest gelagert ist, läuft das untere Ritzel 28 dabei auf dem unteren Zahnkranz 22 ab. Die Drehung des unteren Ritzels 28 wird auf das obere Ritzel 26 übertragen. Dadurch wird der obere Zahnkranz 20 und damit der gesamte Mittelteil der Lenkvorrichtung 10 mit gleicher Geschwindigkeit entgegengesetzt zur Drehrichtung des Lenkradteils gedreht. Somit bleibt der Mittelteil in seiner Ausgangsposition und dreht sich nicht mit dem Lenkradteil mit.

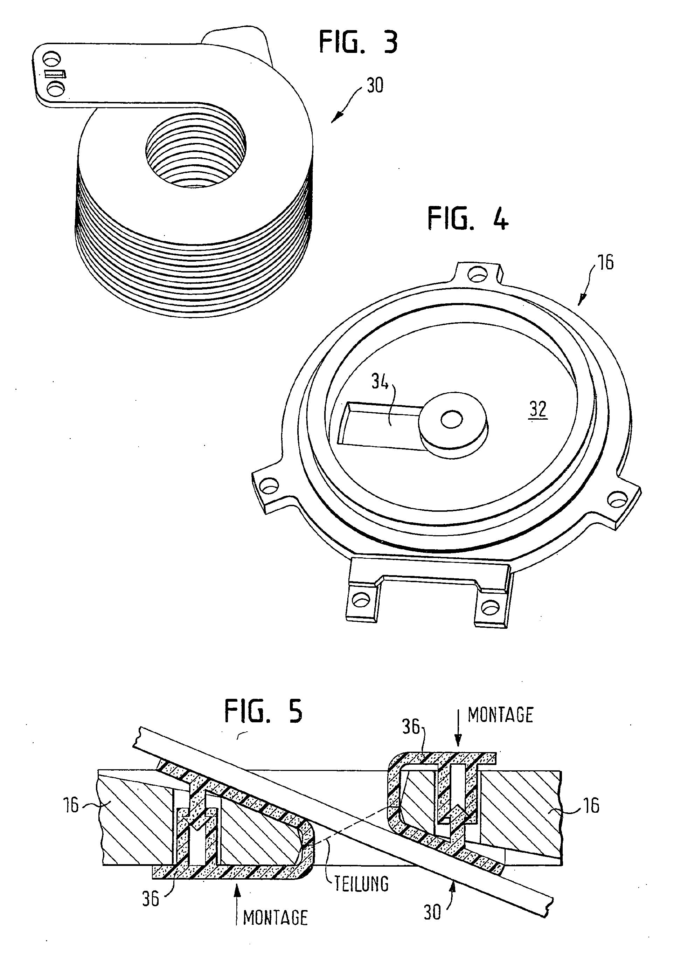

Koaxial zur Lenksäule 18 ist eine schraubenartig gewundene Feder 30 angeordnet, die in Figur 3 einzeln gezeigt ist. Die Feder 30 dient als Träger für die Leitungen, die zur elektrischen Anbindung der am Mittelteil angeordneten Funktionseinheiten erforderlich sind. Die in axialer Richtung elastische Feder 30 weist mehrere Windungen mit gleichem Durchmesser auf, die einen allgemein rechteckförmigen Querschnitt haben.

Das obere Ende der Feder 30 ist mit dem feststehenden Mittelteil der Lenkvorrichtung 10 verbunden. Das untere Ende der Feder 30 ist fahrzeugfest fixiert. Wie in Figur 4 zu erkennen ist, weist der Boden 32 der Nabe 16 eine Durchtrittsöffnung 34 auf, durch die die Feder 30 durchgeführt ist. Der Boden 32 der Nabe 16 greift somit zwischen zwei Windungen der Feder 30 ein. Bei einer Drehung des Lenkradteils wird der Abschnitt der Feder 30 zwischen dem Nabenboden 32 und dem Mittelteil abhängig von der Drehrichtung entweder axial gestaucht oder auseinandergezogen. Das umgekehrte gilt jeweils für den Abschnitt der Feder 30 zwischen dem Nabenboden 32 und dem Lenkstock.

Wie in Figur 5 gezeigt, können ein oder mehrere Kunststoffclips 36, insbesondere Teflonchips, zwischen der Feder 30 und der Nabe 16 bzw. den Speichen 14 der Lenkvorrichtung 10 eingesetzt werden, um die Reibung zwischen diesen Komponenten zu reduzieren.

## Patentansprüche

1. Fahrzeuglenkvorrichtung, mit einem drehfest an eine Lenksäule (18) gekoppelten Lenkradteil und einem gegenüber einer Drehung des Lenkradteils feststehenden Mittelteil, wobei eine Getriebeeinheit (24) vorgesehen ist, die eine Drehung des Lenkradteils in einer ersten Richtung in eine entsprechende Drehung des Mittelteils in eine der ersten Richtung entgegengesetzten zweiten Richtung umsetzt, **dadurch gekennzeichnet, daß** die Fahrzeuglenkvorrichtung (10) ferner eine schraubenartig gewundene Feder (30) umfaßt, die Leitungen zur elektrischen Anbindung von Funktionseinheiten trägt, welche am Mittelteil angeordnet sind.

2. Fahrzeuglenkvorrichtung nach Anspruch 1, **dadurch gekennzeichnet, daß** die Feder (30) koaxial zur Lenksäule (18) angeordnet und in axialer Richtung elastisch ist.

3. Fahrzeuglenkvorrichtung nach Anspruch 1 oder 2, **dadurch gekennzeichnet, daß** ein Ende der Feder (30) mit dem Mittelteil verbunden ist und das andere Ende der Feder (30) fahrzeugfest fixiert ist.

4. Fahrzeuglenkvorrichtung nach einem der vorhergehenden Ansprüche, **dadurch gekennzeichnet, daß** der Lenkradteil eine Nabe (16) mit einer Durchtrittsöffnung (34) umfaßt, durch die die Feder (30) durchgeführt ist.

5. Fahrzeuglenkvorrichtung nach einem der vorhergehenden Ansprüche, **dadurch gekennzeichnet, daß** wenigstens ein Kunststoffclip (36) zur Verringerung der Reibung zwischen der Feder (30) und dem drehbaren Lenkradteil vorgesehen ist.

6. Fahrzeuglenkvorrichtung nach einem der vorhergehenden Ansprüche, **dadurch gekennzeichnet, daß** die Getriebeeinheit (24) zwei drehfest miteinander gekoppelte Ritzel (26, 28) umfaßt, wobei eines der Ritzel (26) mit einem ersten, an den Mittelteil gekoppelten Zahnkranz (20), und das andere Ritzel (28) mit einem zweiten, fahrzeugfest gelagerten Zahnkranz (22) in Eingriff steht.
